**Europäisches Patentamt**

**European Patent Office**

**Office européen des brevets**

(11) Veröffentlichungsnummer : **0 455 602 A1**

# (12) EUROPÄISCHE PATENTANMELDUNG

(21) Anmeldenummer : **91810324.3**

(22) Anmeldetag : **29.04.91**

(51) Int. Cl.$^5$ : **G11B 33/04, G11B 23/02**

(30) Priorität : **03.05.90 CH 1493/90**

(43) Veröffentlichungstag der Anmeldung :
**06.11.91 Patentblatt 91/45**

(84) Benannte Vertragsstaaten :
**DE FR GB SE**

(71) Anmelder : **Gyger, Peter**
**Bodmerstrasse 12 B**
**CH-3645 Gwatt/Thun (CH)**

(72) Erfinder : **Gyger, Peter**
**Bodmerstrasse 12 B**
**CH-3645 Gwatt/Thun (CH)**

(74) Vertreter : **Kerr, Andrew**
**A.KERR AG, Postfach, Finkelerweg 44**
**CH-4144 Arlesheim (CH)**

(54) **Halter für Tonträger-Hüllen.**

(57)     Der Halter ist mit je zwei Seitenwand- und Vorderwandteilen (3 bzw. 4) und mit einer mittleren Trennwand (5) versehen, die sich von der Rückwand (1) so weit nach vorn erstreckt, dass zwischen ihr und den Vorderwandteilen (4) ein Raum von der Dicke einer CD-Hülle frei bleibt. Dadurch können wahlweise zwei Tonbandkassetten-Hüllen nebeneinander oder eine CD-Hülle im Halter aufgenommen werden.

Fig. 1

EP 0 455 602 A1

Die Erfindung betrifft einen Halter zur Aufnahme einer CD-Hülle oder zweier Tonbandkassetten-Hüllen, insbesondere zum Anbringen an einer Wand, und zwar derart, dass die Titelseiten der Hüllen von vorn sichtbar bleiben.

Mit "CD-Hülle" ist nachstehend die Hülle oder "Box" einer "Compact Disc" (für eine Laserabspielung geeignete Schallplatte bzw. CD-Datenträger bzw. ROM-Diskette) bezeichnet und mit "Tonbandkassetten-Hülle" eine solche, die einen Tonträger in Bandform enthält. Die genannten Hüllen haben normierte Abmessungen.

Es sind eine Reihe von Vorrichtungen zum Archivieren von CD-Hüllen oder Tonbandkassetten-Hüllen bekannt geworden. Diese Gegenstände werden dabei so gelagert, dass nur die Rücken der Hüllen sichtbar sind, während die Titelseite, die üblicherweise Illustrationen oder sonstige Hinweise auf den Inhalt trägt, nicht sichtbar ist.

Die bisher bekannten Archiviervorrichtungen unterscheiden sich voneinander darin, dass sie entweder für die Aufnahme von Hüllen von CDs oder aber für solche von Tonbandkassetten dimensioniert sind.

Die Erfindung bezweckt dagegen die Schaffung eines Halters der eingangs genannten Art, der wahlweise sowohl für CD-Hüllen als auch für Tonbandkassetten-Hüllen verwendbar ist, und der darüber hinaus so beschaffen ist, dass die Titelseite der darin gelagerten Hüllen von vorn sichtbar bleibt.

Diese Vorteile werden durch die Merkmale des Patentanspruchs 1 erreicht. Vorzugsweise bestehen die genannten Mittel aus einer vertikalen mittleren Trennwand, die sich von der Rückwand so weit nach vorn erstreckt, dass zwischen ihr und den Vorderwandteilen ein Raum von der Dicke einer CD-Hülle frei bleibt, wobei sich die Breite der Rückwand über die Quadratseitenlänge einer CD zuzüglich der Dicke der Trennwand erstreckt.

Durch die Verwendbarkeit des gleichen Halters sowohl für CD-Hüllen als auch für Tonbandkassetten-Hüllen vereinfacht sich die Herstellung, und die Benützung ist entsprechend flexibler. Der Halter kann sowohl im Fachgeschäft als Layout-Wandhalter zur Präsentation dienen als auch für den Hausgebrauch zur übersichtlichen Aufbewahrung der Tonträger an einer Wand oder dergleichen.

In den Zeichnungen ist ein Ausführungsbeispiel der Erfindung dargestellt. Es zeigen:

Fig. 1 den Halter im Schrägbild,

Fig. 2 eine Draufsicht desselben,

Fig. 3 eine Draufsicht mit zwei darin gelagerten Tonbandkassetten-Hüllen und

Fig. 4 eine Draufsicht mit einer darin gelagerten CD-Hülle.    -

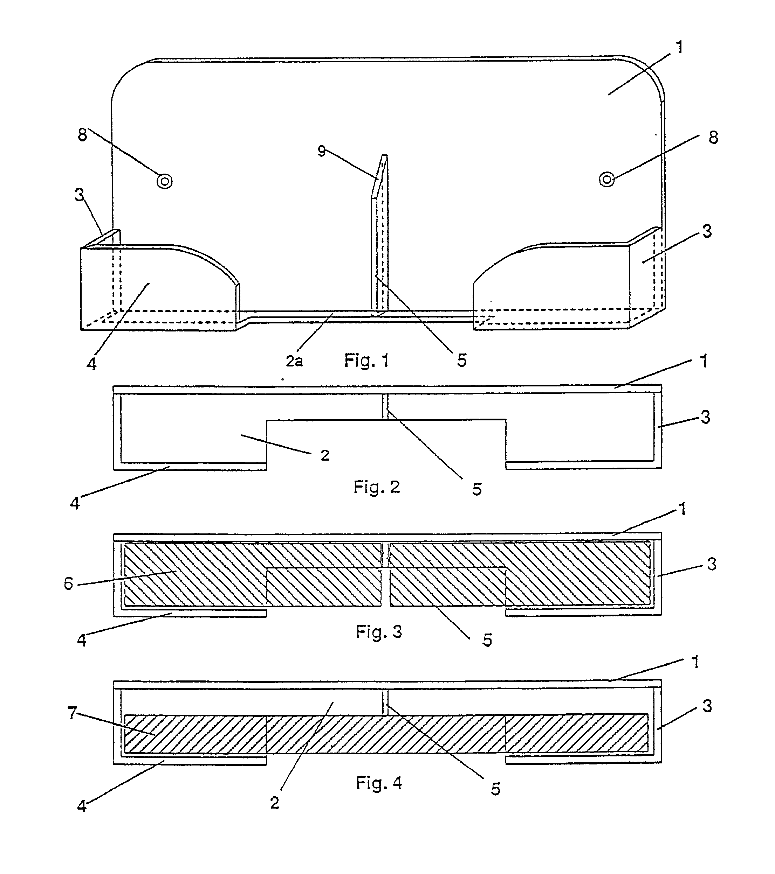

Fig. 1 zeigt den Wandhalter aus transparentem oder farbigem Kunststoff oder einem anderen geeigneten Material mit einer Rückwand 1, mit zwei angesenkten Löchern 8, womit der Halter mittels Schrauben oder Nägeln an dem gewünschten Ort befestigt werden kann, wenn nicht eine andere Fixierart wie z.B. doppelseitiges Klebeband zur Befestigung verwendet wird. Am unteren Ende der Rückwand 1 ist der Boden 2 rechtwinklig zur Rückwand angebracht, mit einem in der Mitte liegenden Ausschnitt 2a, der links und rechts bis zur Vorderwand 4 und nach hinten bis zur Trennwand 5 reicht. Dieser Ausschnitt sorgt dafür, dass die CD-Hülle oder die Tonbandkassetten-Hüllen mit der Hand leicht eingelegt und entnommen werden können.

Auf beiden Seiten des Bodens 2 ist ein Seitenwandteil 3 ca. ein Sechstel der Höhe einer CD-Hülle hochgezogen, und auf der Vorderseite des Bodens 2 ist auf beiden Seiten ein Vorderwandteil 4 gleich hoch wie die Seitenwände 3. Die Seitenwände 3 und Vorderwände 4 haben die Aufgabe, die CD-Hülle bzw. die Tonbandkassetten-Hüllen seitlich und nach vorne zu halten.

Die Trennwand 5 ist so angeordnet und dimensioniert, dass zusammen mit den Seitenwänden 3 und den Vorderwänden 4 links und rechts je eine Tonbandkassette 6, wie aus Fig. 3 ersichtlich ist, gehalten wird. Die Trennwand 5 hat im gleichen Halter eine zweite Funktion. Sie definiert, wie aus Fig. 4 ersichtlich ist, wiederum zusammen mit den Seitenwänden 3 und Vorderwänden 4, die Lage einer CD-Hülle 7, die in der Dicke ein kleineres Mass aufweist als die Tonbandkassetten-Hülle 6, sie wird so durch die Trennwand 5 von hinten gehalten. Die Trennwand 5 weist im oberen Teil eine Anschrägung auf, damit die CD-Hülle leichter eingeführt werden kann, und sie hat etwa die doppelte Höhe wie die Vorderwände 4, damit die Tonbandkassetten-Hüllen seitlich eine gute Führung haben.

Die Rückwand 1 kann besonders weit hochgezogen sein, um als Fläche für Illustrationen und Texte, sei es aus ästhetischen Gründen oder zu Verkaufs- und Werbezwecken, zu dienen. Diese können z.B. von der Rückseite her aufgeklebt werden.

Sowohl die Kassetten-Hüllen als auch die CD-Hülle werden durch die Elemente des Halters in definierter Stellung gehalten. Durch die Abschrägung oder Abrundung 9 der Trennwand 5 wird das Einführen einer CD-Hülle erleichtert, während der Ausschnitt 2a des Bodens 2 das Herausnehmen der verschiedenen Hüllen erleichtert. Die Höhe der Seitenwände 3 und der Vorderwände 4 beträgt vorzugsweise etwa ein Sechstel der Höhe einer CD-Hülle, damit die Hüllen im Halter zwar sicher gehalten werden, aber andererseits der Einlege- und Entnahmeweg möglichst kurz ist.

Der beschriebene Halter kann zur Präsentation im Verkaufsgeschäft oder zu Hause Verwendung finden, wo z.B. ganze Wände damit dekoriert werden können, auf der Innenseite einer Schranktüre, den toten Raum ausnutzend, auf einem Wechselrahmen, zusammen mit dem Poster des Lieblingssängers, auf einem Wechselrahmen für Märchenkassetten, zusammen mit Kinderzeichnungen, usw.

**Patentansprüche**

1. Halter zur Aufnahme einer CD-Hülle oder zweier Tonbandkassetten-Hüllen, derart, dass deren Titelseiten von vorn sichtbar bleiben, gekennzeichnet durch eine Rückwand (1), einen Boden (2) und je zwei Seitenwand- und Vorderwandteile (3 bzw. 4) sowie durch Mittel zur Unterteilung des durch die genannten Elemente umschriebenen Raums, derart, dass wahlweise eine CD-Hülle oder zwei Tonbandkassetten-Hüllen aufgenommen werden können.

2. Halter nach Anspruch 1, dadurch gekennzeichnet, dass die Mittel aus einer vertikalen mittleren Trennwand (5) bestehen, die sich von der Rückwand (1) so weit nach vorn erstreckt, dass zwischen ihr und den Vorderwandteilen (4) ein Raum von der Dicke einer CD-Hülle frei bleibt.

3. Halter nach Anspruch 2, dadurch gekennzeichnet, dass die Breite der Rückwand (1) sich über die Quadratseitenlänge einer CD-Hülle zuzüglich der Dicke der Trennwand (5) erstreckt.

4. Halter nach Anspruch 1, dadurch gekennzeichnet, dass die Höhe der Seiten- und Vorderwandteile mindestens annähernd ein Sechstel der Quadratseitenlänge einer CD-Hülle beträgt.

5. Halter nach Anspruch 4, dadurch gekennzeichnet, dass die Höhe der Trennwand (5) mindestens annähernd das Doppelte der Höhe der Seiten- und Vorderwandteile beträgt.

6. Halter nach Anspruch 2, dadurch gekennzeichnet, dass die Trennwand (5) an ihrem oberen Ende (9) abgeschrägt oder abgerundet ist.

7. Halter nach Anspruch 1, dadurch gekennzeichnet, dass der Boden (1) in seiner Mittelpartie vorn einen Ausschnitt (2a) aufweist.

Fig. 1

Fig. 2

Fig. 3

Fig. 4

Europäisches
Patentamt

# EUROPÄISCHER RECHERCHENBERICHT

Nummer der Anmeldung

EP    91 81 0324

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-277407 (PALO ALTO DESIGN GROUP)<br>* Spalte 4, Zeile 39 - Spalte 6, Zeile 11 *<br>* Zusammenfassung; Figuren *<br>--- | 1-4, 6, 7 | G11B33/04<br>G11B23/02 |
| A | US-A-4707247 (R.L.SAVOY)<br>* Zusammenfassung; Figuren *<br>--- | 1 | |
| A | US-A-4793477 (L.F.MANNING ET AL)<br>* Anspruch 1; Figuren *<br>--- | 1 | |
| A | AT-A-291768 (EUMIG)<br>* Ansprüche 1, 2; Figuren *<br>--- | 1 | |
| A | EP-A-289329 (CERTRON CORP.)<br>--- | | |
| A | FR-A-2375687 (RENT DESIGN INC.)<br>--- | | |
| A | FR-A-2428299 (A.ALBY)<br>----- | | |

RECHERCHIERTE
SACHGEBIETE (Int. Cl.5 )

G11B

Der vorliegende Recherchenbericht wurde für alle Patentansprüche erstellt

| Recherchenort | Abschlußdatum der Recherche | Prüfer |
|---|---|---|
| DEN HAAG | 07 AUGUST 1991 | DECLAT M.G. |

EPO FORM 1503 03.82 (P0403)